# EUROPEAN PATENT SPECIFICATION

(11) **EP 2 557 400 B1**
(45) Date of publication and mention of the grant of the patent: **06.06.2018**
(21) Application number: 11765996.1
(22) Date of filing: 07.04.2011
(51) Int. Cl.: G01D 11/28, G02B 6/00, F21V 8/00

(54) **LIGHT GUIDE PLATE AND POINTER INSTRUMENT WITH SAME**
LICHTLEITERPLATTE UND ZEIGERINSTRUMENT DAMIT
PLAQUE DE GUIDE DE LUMIÈRE, ET INSTRUMENT À AIGUILLE ASSOCIÉ

(30) Priority: 07.04.2010 JP 2010088891
(43) Date of publication of application: 13.02.2013
(73) Proprietor: Yazaki Corporation, Minato-ku Tokyo 108-8333 (JP)
(72) Inventor: MIYAZAWA, Tomohiro, Shizuoka (JP); OGAWA, Masayuki, Shizuoka (JP)
(74) Representative: Grünecker Patent- und Rechtsanwälte PartG mbB
(86) International application number: PCT/JP2011/058852
(87) International publication number: WO 2011/126096

(56) References cited:
- EP-A1- 1 843 180
- JP-A- 2000 180 632
- JP-A- 2003 194 591
- JP-A- 2006 208 221
- JP-A- 2009 258 017
- JP-U- 50 109 668
- JP-U- 50 116 436
- JP-U- 53 043 948
- US-A1- 2002 163 790
- US-A1- 2004 130 912
- US-A1- 2007 013 663

## Description

### Technical Field

The present invention is related to a light guide plate for illuminating a dial provided with translucent designs, which are indicated by an indicator, from the rear surface thereof, and an indicating instrument with such a light guide plate.

### Background Art

A movable body, such as a vehicle or a ship, is provided with a indicating instrument displaying plural kinds of information, which is measured by various measurement units, to the passenger such as a driver of the movable body (for example, refer to PTL 1).

Examples of this kind of indicating instrument include a speedometer displaying the speed of a vehicle as a movable body, a tachometer displaying the rotating speed of an engine, a fuel meter displaying the remaining amount of fuel, and a water temperature meter displaying the temperature of cooling water of an engine.

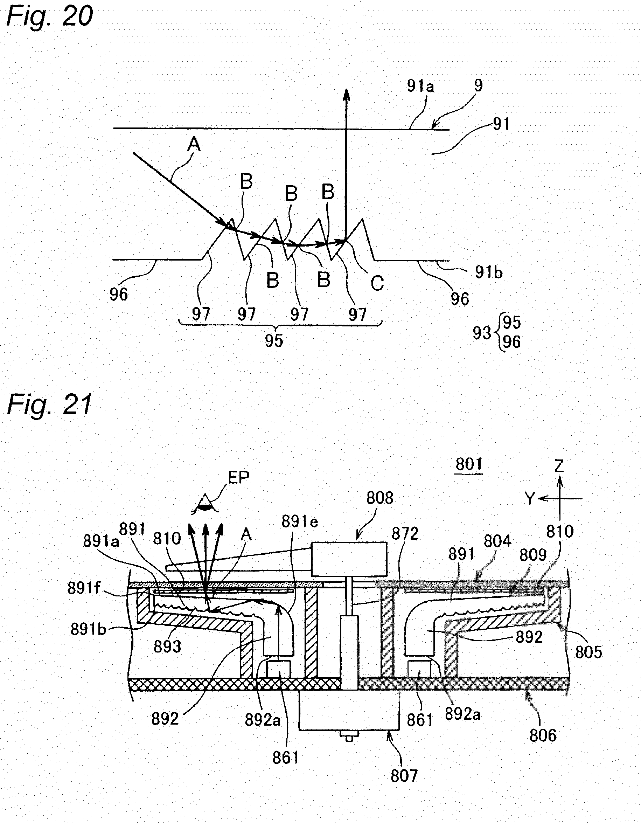

Fig. 21 illustrates a speedometer 801 which is a indicating instrument of the related art. This speedometer 801 includes a substantially circular dial 804 that has translucent designs such as numbers and calibrations indicating the speed; a case 805 that is arranged on a rear surface of the dial 804; a substrate 806 in which plural light sources 861 are arranged on a front surface and an internal rotating mechanism 807 is provided on a rear surface and that is arranged such that the front surface overlap a rear surface side of the case 805; an indicating member 808 that is fixed to a tip end of a indicator shaft 872 of the internal rotating mechanism 807, which sequentially passes through the substrate 806, the case 805, and the dial 804, and is arranged so as to rotate along a front surface of the dial 804; a light guide plate 809 that is housed in the case 805 and is arranged on the rear surface of the dial 804 with a spacing; and a prism sheet 810 that is arranged between the dial 804 and the light guide plate 809. The light guide plate 809 includes a light emitting section 891 that is formed of a plate having an arc shape in plan view; and a substantially semi-cylindrical light guide section 892 that is connected along an inner edge 891e of the light emitting section 891 and is formed so as to extend from the inner edge 891e in the substantially perpendicular direction. The prism sheet 810 is formed in substantially the same shape as that in plan view of the light emitting section 891 of the light guide plate 809. For convenience of the description, the arrangements and the like of the respective members will be described using an X axis, an Y axis, and a Z axis which are perpendicular to each other.

The plural light sources 861 are arranged on the front surface of the substrate 806 in an arc shape at regular intervals such that the front direction thereof is parallel to the Z axis direction. The dial 804 is arranged so as to be parallel to the XY plane. The light emitting section 891 of the light guide plate 809 is arranged so as to be substantially parallel to the XY plane, and the light guide section 892 of the light guide plate 809 is arranged so as to extend along the Z axis direction toward the substrate 806.

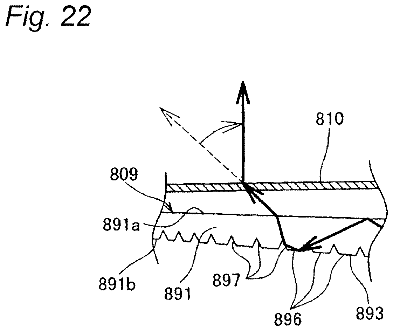

On a tip end of the light guide section 892, a light incidence surface 892a, which is arranged to face the plural light sources 861 arranged in an arc shape and on which light of the plural light sources 861 is incident, is provided. In addition, a first surface (hereinafter, referred to as the front surface) 891a of the light emitting section 891 is arranged to face the rear surface of the dial 804 with the prism sheet 810 interposed therebetween. In addition, on a second surface (hereinafter referred to as the rear surface) 891b of the light emitting section 891, as illustrated in Fig. 22, a reflective section 893 with plural furrows 897, which have a V-shaped cross-section along a circumferential direction of the light emitting section 891, is provided. These plural furrows 897, which are provided in the reflective section 893 and have a V-shaped cross-section, are arranged at intervals along a direction from the inner edge 891e toward an outer edge 891f of the light emitting section 891 (that is, along the radial direction). A planar reflective surface 896 is provided between the plural furrows 897 having a V-shaped cross-section. In addition, as illustrated in the respective drawings, light, which is emitted from the light sources 861 to the light incidence surface 892a, travels through the light guide section 892 along the Z axis direction with the light guide section 892 and the light emitting section 891 as an optical path; travels through the light emitting section 891 in the radial direction; is reflected toward the front surface 891a by the reflective section 893; and exits the front surface 891a toward the prism sheet 810.

At this time, in the light guide plate 809, as illustrated in Fig. 22, light which travels through the light emitting section 891 is reflected by the reflective surface 896 and the plural furrows 897 having a V-shaped cross-section in a direction inclined toward the front surface 891a of the light emitting section 891 and exits the front surface 891a in the oblique direction. Then, the light is refracted (that is, is corrected) by the prism sheet 810, which is provided between the dial 804 and the light guide plate 809, such that the traveling direction of the light emitted from the front surface 891a is perpendicular to the dial 804 and the light is incident on the rear surface of the dial 804. As a result, the translucent designs provided on the dial 804 emit light and the intensity of light when the translucent designs are seen from the front direction can be secured.

### Citation List

### Patent Literature

[PTL 1] JP-A-2003-194594

This document discloses a flexible backlight unit for a key of an input device. The unit includes a light guide plate with a light guide pattern portion in which a plurality of engraved patterns are formed in a plurality of requirement character shapes so that light can be diffused and scattered at desired luminance.

### Summary of Invention

### Technical Problem

However, in such a speedometer 801, in order to sufficiently secure the intensity of light when the translucent designs are seen from the front direction, it is necessary that the prism sheet 810 be provided for correcting the traveling direction of light emitted from the front surface 891a of the light emitting section 891. Therefore, there is a problem in that the number of components increases and thus a reduction in manufacturing cost is hindered.

An object of the present invention is to solve the above-described problem. That is, the object of the present invention is to provide a light guide plate capable of securing a sufficient intensity of light in the front direction without using a member for correcting the traveling direction of the light; and an indicating instrument with such a light guide plate.

### Solution to Problem

In order to achieve the above-described object, the invention is described in claim 1.

According to a second invention, in the first invention, the reflective body is provided so that a ratio of an area in plan view of the reflective body occupied per unit area of the second surface increases in a direction away from the light source.

In order to achieve the above-described object, according to a third invention, there is provided an indicating instrument comprising:
a dial that is provided with translucent designs; and
a light guide plate that is arranged so as to overlap a rear surface of the dial,
wherein the light guide plate is the light guide plate according to any one of the first to third inventions.
Preferred embodiments are outlined in the dependent claims.

### Advantageous Effects of Invention

According to the invention, in a reflective surface provided in a light emitting section, a plurality of reflective bodies formed of a plurality of striated portions, which are arranged in a direction intersecting the traveling direction of light traveling through the light emitting section and to be in contact with each other in a width direction thereof and are provided to be convex or concave on the second surface, are provided at intervals, are provided at intervals; and the plurality of striated portions are formed so as to cause incident light to pass therethrough while refracting the light toward the first surface and then reflect the light in a direction perpendicular to the dial. Therefore, light which travels through the light emitting section can be refracted and reflected by the reflective section and exit the first surface in a direction perpendicular to the dial. As a result, the intensity of light in the front direction can be sufficiently secured without using a member, such as a prism sheet, for correcting a traveling direction of light.

According to the second invention, the reflective body is provided such that a ratio of an area in plan view of the reflective body occupied per unit area of the second surface increases in a direction away from the light source. Therefore, the amount of light reflected by the reflective body increases in proportion to the area in plan view of the reflective body and thus the difference between the intensity of light emitted from a portion which is distant from a light source of the reflective section and the intensity of light emitted from a portion which is closer to the light source than the distant portion, can be reduced. As a result, unevenness in the intensity of light, which exit the first surface of the light emitting surface, can be prevented.

According to the invention, in a portion of the reflective body which is arranged at a position where the intensity of light, which travels through the light emitting section, is lower than a predetermined reference value, one or a plurality of auxiliary striated portions are provided so as to be in contact with the striated portions of the reflective body in a width direction thereof. As a light source used for the above-described indicating instrument, a light-emitting diode is used in general. The light-emitting diode includes a light emitting element made of a semiconductor and a translucent resin which seals the light emitting element. The translucent resin has a light collecting structure, such as a lens, for improving the intensity of light in the front direction of the light-emitting diode. Therefore, a light source formed of the light-emitting diode can secure a high intensity of light in the front direction, but the intensity of light deteriorates in a direction away from the front direction. As a result, there is a problem in that unevenness in the intensity of light which travels through a light emitting section occurs and unevenness in the intensity of light which exits the first surface of the light emitting section occurs. On the other hand, in the present invention, since the above-described auxiliary striated portions are provided, at a position where the intensity of light traveling through the light emitting section is lower than a predetermined reference value, a greater amount of light can be reflected in a direction perpendicular to the dial and exit the first surface due to the auxiliary striated portions. As a result, the intensity of light which exits the first surface of the light emitting section corresponding to the position can be made the same as that of the other positions and thus unevenness in the intensity of light which exits the first surface of the light emitting section can be prevented.

According to the third invention, there is provided an indicating instrument including: a dial that is provided with translucent designs; and a light guide plate that is arranged so as to overlap a rear surface of the dial, wherein the light guide plate is the light guide plate according to any one of the first to third inventions. Therefore, light traveling through a light emitting section of a light guide plate can be refracted and reflected by a reflective section and exit the first surface in a direction perpendicular to a dial. As a result, the intensity of light in the front direction can be sufficiently secured without using a member, such as a prism sheet, for correcting the traveling direction of light, thereby reducing the number of components and reducing the manufacturing cost.

### Brief Description of Drawings

Fig. 1 is a front view illustrating a speedometer according to a first embodiment of the present invention.
Fig. 2 is a cross-sectional view taken along line K-K of Fig. 1.
Fig. 3 is a perspective view illustrating a light guide plate and a wiring board included in the speedometer of Fig. 1.
Figs. 4(a) to 4(c) are cross-sectional views schematically illustrating a configuration of a reflective body provided in the light guide plate of Fig. 3 and states in which light is refracted and reflected by the reflective body, in which Fig. 4(a) illustrates a state where the reflective body is configured by two ridges, Fig. 4(b) illustrates a state where the reflective body is configured by three ridges, and Fig. 4(c) illustrates a state where the reflective body is configured by four ridges.
Fig. 5(a) is a diagram illustrating a method of determining shapes of plural ridges included in a reflective body and Fig. 5(b) is a diagram illustrating a traveling range of light reflected by the reflective body.

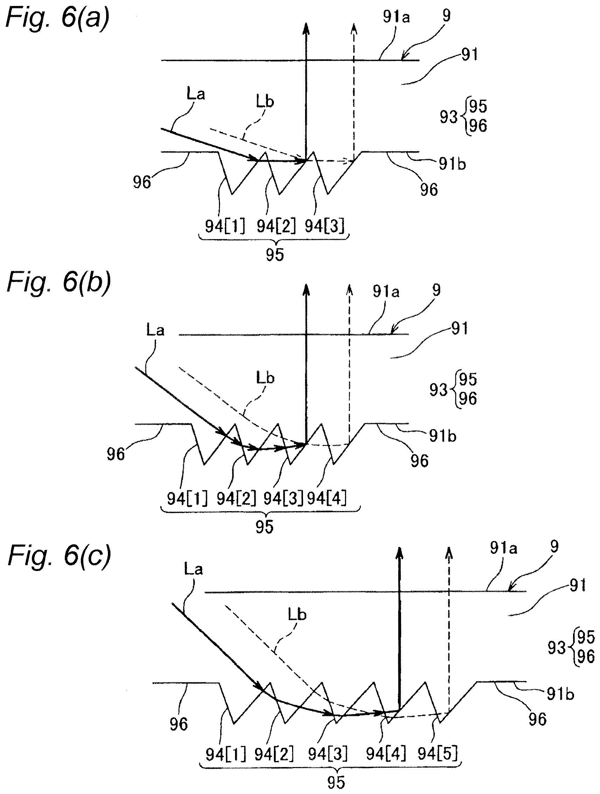

Figs. 6(a) to 6(c) are cross-sectional views schematically illustrating states in which light is refracted and reflected when a ridge having the same shape in cross-section is further added to a reflective body configured by plural ridges having the same shape in cross-section, in which Fig. 6(a) illustrates a state where a third ridge is added to a reflective body configured by two ridges, Fig. 6(b) illustrates a state where a fourth ridge is added to a reflective body configured by three ridges, and Fig. 6(c) illustrates a state where a fifth ridge is added to a reflective body configured by four ridges.
Fig. 7(a) is a cross-sectional view illustrating a configuration (having different intervals between reflective bodies) of a reflective section which is provided in the light guide plate of Fig. 3, Fig. 7(b) is a cross-sectional view illustrating a configuration (having different sizes of ridges) of a first modification example of the reflective section illustrated in Fig. 7(a), and Fig. 7(c) is a cross-sectional view illustrating a configuration (having different numbers of ridges) of a second modification example of the reflective section illustrated in Fig. 7(a).
Fig. 8(a) is a perspective view illustrating a shape (continuous shape) of a reflective body included in a reflective section which is provided in the light guide plate of Fig. 3, and Fig. 8(b) is a perspective view illustrating a shape (discrete shapes) of a first modification example of the reflective body illustrated in Fig. 8(a).

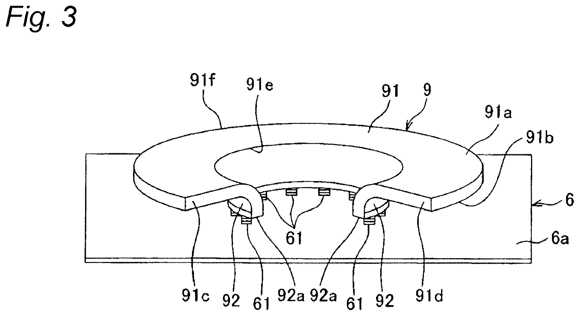

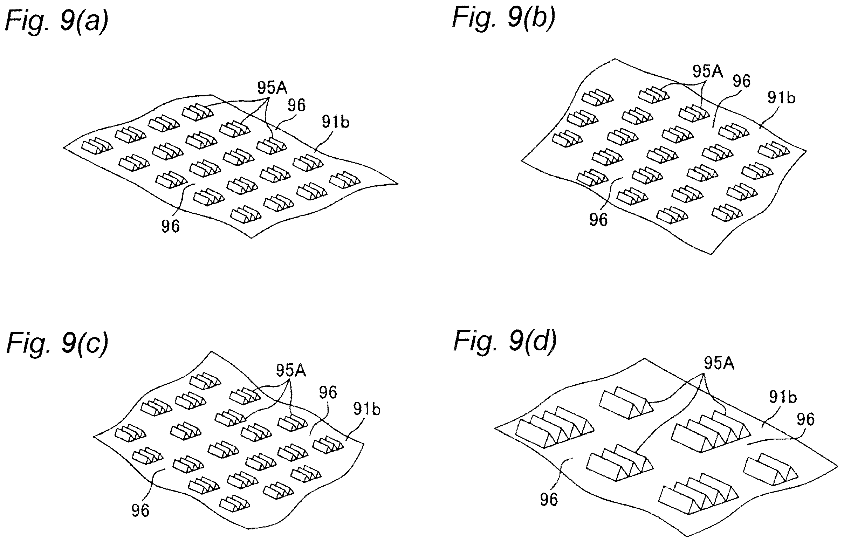

Fig. 9(a) is a perspective view illustrating the arrangement (rectangular arrangement) of a first modification example of refractive bodies included in a reflective section which is provided in the light guide plate of Fig. 3, Fig. 9(b) is a perspective view illustrating the arrangement (hexagonal lattice-shaped arrangement) of a second modification example of the refractive bodies illustrated in Fig. 9(a), Fig. 9(c) is a perspective view illustrating the arrangement (random arrangement) of a third modification example of the refractive bodies illustrated in Fig. 9(a), and Fig. 9(d) is a perspective view illustrating the arrangement (having different numbers of ridges of the reflective bodies) of a fourth modification example of the refractive bodies illustrated in Fig. 9(a).
Fig. 10(a) is a cross-sectional view illustrating shapes in cross-section (quadrangular shapes) of a first modification example of ridges configuring a reflective body of a reflective section which is provided in the light guide plate of Fig. 3, Fig. 10(b) is a cross-sectional view illustrating shapes in cross-section (having different directions of tip ends) of a second modification example of the ridges, and Fig. 10(c) is a cross-sectional view illustrating shapes in cross-section (having different sizes) of a third modification example of the ridges.
Fig. 11 is a diagram schematically illustrating light which travels through a light emitting section of the light guide plate of Fig. 3.
Fig. 12 is a cross-sectional view illustrating a speedometer according to a second embodiment of the present invention.
Fig. 13 is a rear view illustrating a light guide component included in the light guide plate of Fig. 12.
Fig. 14 is a rear view illustrating the light guide plate of Fig. 12.
Fig. 15 is a rear view schematically illustrating a position where the intensity of light traveling through a first part of the light guide component of Fig. 13 is lower than a predetermined reference value.
Fig. 16(a) is a cross-sectional view illustrating the arrangement of auxiliary ridges which are provided in reflective bodies of a reflective section included in the light guide component of Fig. 12 and Fig. 16(b) is a cross-sectional view illustrating another arrangement of the auxiliary ridges.
Fig. 17(a) is a rear view illustrating a configuration of a first modification example of the light guide plate of Fig. 12 and Fig. 17(b) is a rear view illustrating a configuration of a second modification example of the light guide plate.
Fig. 18 is a perspective view illustrating a part of another configuration of the light guide plate according to the present invention.
Fig. 19 is a rear view schematically illustrating another configuration of a reflective section which is provided in the light guide plate according to the present invention.
Fig. 20 is a cross-sectional view schematically illustrating a configuration of a fifth modification example (plural furrows) of a reflective body included in a reflective section which is provided in the light guide plate of Fig. 3 and a state in which light is refracted and reflected by the reflective body.
Fig. 21 is a cross-sectional view illustrating a speedometer of the related art.
Fig. 22 is a diagram schematically illustrating the traveling direction of light which is incident on a light guide plate included in the speedometer of Fig. 21.

### Description of Embodiments

### (First Embodiment)

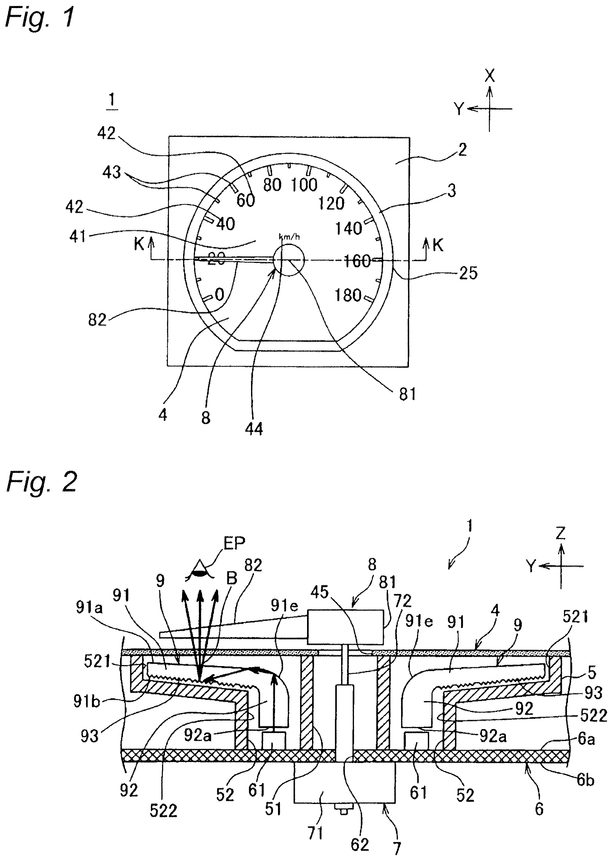

Hereinafter, a speedometer with a light guide plate according to a first embodiment of the present invention will be described with reference to Figs. 1 to 11. Here, for convenience of the description, the arrangement and the like of the respective members will be described using an X axis, an Y axis, and a Z axis which are perpendicular to each other.

A speedometer as an indicating instrument (hereinafter, sometimes referred to as "the meter"; and in the drawing, represented by reference numeral 1) is mounted to, for example, an instrument panel of a vehicle and a dial thereof is arranged toward a front side (front) facing the passenger. In addition, in this embodiment, a speedometer will be described as an example. The present invention is not limited thereto and may be applied to other kinds of meters such as a tachometer or a fuel meter.

As illustrated in the respective drawings, a speedometer 1 includes a facing plate 2, a decorative ring member 3, a dial 4, a case 5, a wiring board 6, an internal rotating mechanism 7, an indicating member 8, a light guide plate 9, a rear cover not illustrated in the drawings, and a front glass not illustrated in the drawings.

The facing plate 2 is made of a black synthetic resin having a light blocking effect and a front shape thereof is substantially rectangular. The facing plate 2 is provided with an opening 25 in which the decorative ring member 3 and the dial 4 are arranged inside. In addition, the facing plate 2 may be provided with various lamps such as a turn signal indicator or a warning indicator and the like which are configured by a translucent member such as a transparent or semi-transparent synthetic resin or a glass, which is formed in a predetermined shape, passing therethrough and being inserted thereinto. The facing plate 2 is arranged so as to be parallel to the XY plane.

The decorative ring member 3 is made of, for example, a synthetic resin with a plated surface and is a ring-shaped member of which an external form is formed in the same shape as that of the opening 25 provided in the facing plate 2. The respective indicators, which are provided in the dial 4 described below, are arranged inside the decorative ring member 3. As a result, the respective indicators of the dial 4 are surrounded by the decorative ring member 3, which makes the boundary between the facing plate 2 and the dial 4 clear and thus improves visibility.

The dial is a substantially circular member made of, for example, a transparent or semi-transparent synthetic resin. The dial 4 is arranged inside the opening 25, provided in the facing plate 2, along with the decorative ring member 3. The dial 4 is provided with a light blocking area 41 in which light-blocking ink is printed and indicators 42, 43, and 44 as translucent designs which are formed along the shapes of characters and calibrations without using light blocking ink (such that light blocking ink is not printed). As a result, the respective indicators are illuminated with light from the rear side to emit light. The indicators 42 represent numbers and the indicators 43 represent calibrations. The respective indicators 42 and 43 are arranged in an arc shape along an inner edge of the decorative ring member 3. The indicators 42 and 43 represent a measured value, such as the speed or the number of revolutions of an engine, to the passenger in cooperation with a needle 82 of the indicating member 8 described below pointing at the indicators 42 and 43. The indicator 44 represents a unit of a measured value and is arranged at the center of the dial 4. At the center of the dial 4, a dial through hole 45, into which a rotating shaft 72 of the internal rotating mechanism 7 described below is inserted, is provided. The dial 4 is arranged so as to be parallel to the XY plane.

The case 5 is made of, for example, a synthetic resin and a front shape thereof is a box shape which is substantially the same as the external form of the facing plate 2. The case 5 is provided with a cylindrical case through hole 51 which is provided at a position corresponding to the dial through hole 45 of the dial 4 and passes through a front side (upper side of Fig. 2) and a rear side (lower side of Fig. 2) and a light guide plate housing section 52 which is formed to surround the case through hole 51. Through the case through hole 51, the rotating shaft 72 of the internal rotating mechanism 7 described below is arranged.

The light guide housing section 52 is configured by a first space 521 and a second space 522 which are two cylindrical spaces having the same inner diameter and different outer diameters. The first space 521 is formed to have an outer diameter which is the same as that of the dial 4 and an inner diameter which is the same as the outer diameter of the case through hole 51. The second space 522 is formed to have an outer diameter which is smaller than that of the first space 521 and an inner diameter which is the same as the outer diameter of the case through hole 51. The first space 521 and the second space 522 concentrically overlap each other along the axial direction so as to be connected to each other. Among the first space 521 and the second space 522, the first space 521 having a larger outer diameter is arranged close to the front surface of the case 5, and the second space 522 having a smaller outer diameter is arranged toward the rear surface of the case 5. The light guide plate housing section 52 is provided with openings at each of an end of the first space 521 on the front side of the case 5 and an end of the second space 522 on the rear side of the case 5 so as to pass through the case 5. The light guide plate housing section 52 houses the light guide plate 9 described below. In addition, on the front side of the case 5, the dial 4, the decorative ring member 3, and the facing plate 2 described above are arranged to overlap each other, and the dial 4, the decorative ring member 3, and the opening 25 of the facing plate 2 are arranged to correspond to an opening of the light guide plate housing section 52 on the front side of the case 5 (an end of the first space 521 close to the front surface of the case 5).

Various electronic components are mounted onto a front surface 6a and a rear surface 6b of the wiring board 6. The wiring board is a known electronic substrate in which a wiring pattern for electrically connecting various electronic components to each other is formed of thin metal film. On the front surface 6a of the wiring board 6, plural light sources 61 for illuminating the respective indicators of the dial 4 through the light guide plate 9 described below and a lamp light source, not illustrated in the drawings, for illuminating various lamps and the like are provided. The plural light sources 61 are arranged at regular intervals along a circumferential direction of the second space 522 of the light guide housing section 52 (that is, in an arc shape), at a position corresponding to an opening of the light guide housing section 52 on the rear side of the case 5. The wiring board 6 is provided with a wiring board through hole 62, into which the rotating shaft of the internal rotating mechanism 7 described below is inserted, at a position corresponding to the case through hole 51. The wiring board 6 is arranged to be parallel to the XY plane such that the front surface 6a closely overlap the rear side of the case 5.

The light source 61 is a known surface mounted light-emitting diode including a light emitting element which is made of a semiconductor, a lead frame onto which the light emitting element is mounted, and a translucent resin which seals the light emitting element. The translucent resin of the light source 61 has a light collecting structure for improving the intensity of light in the front direction.

The internal rotating mechanism 7 includes a main body 71 and the rotating shaft 72 as an indicator shaft which axially and rotatably supports the main body 71, and is a known stepping motor which rotates the rotating shaft 72 in response to a pulse signal (the number of pulses or the like) input as a control signal. The internal rotating mechanism 7 is connected to a controller not illustrated in the drawings, and operates by receiving the pulse signal which is output from the controller and corresponds to a measured value such as the speed or the number of revolutions of an engine. The internal rotating mechanism 7 is attached such that the main body 71 overlaps the rear surface 6b of the wiring board 6 in a state where the rotating shaft 72 is inserted into the wiring board through hole 62 of the wiring board 6. That is, the rotating shaft 72 passes through the wiring board 6 from the rear surface 6b to the front surface 6a. Furthermore, the rotating shaft 72 sequentially passes through the case through hole 51 of the case 5 and the dial through hole 45 of the dial 4, and a tip end thereof protrudes from the front surface of the dial 4.

The indicating member 8 includes a base 81 which is formed in a flat cylinder shape and the rod-like needle 82 which is connected so as to extend in the normal direction of an outer peripheral surface of the base 81. In the indicating member 8, the center of the base 81 is fixed to the tip end of the rotating shaft 72 of the internal rotating mechanism 7 and the needle 82 rotates about the rotating shaft along with the rotation of the rotating shaft. The needle 82 rotates to point at the indicators 42 and 43 such as numbers and calibrations which are provided on the dial 4 and to show a measured value, such as the speed or the number of revolutions of an engine, to the passenger.

The light guide plate 9 is configured using, for example, a high-transparency material such as acrylic resin and a surface thereof is formed to be smooth. Therefore, the light guide plate 9 is a member for guiding light, which is incident on the inside thereof, along the shape thereof. As illustrated in Fig. 3, the light guide plate9 includes a light emitting section 91 that is formed of a plate having an arc shape in plan view; and a substantially semi-cylindrical light guide section 92 that is connected along an inner edge 91e of the light emitting section 91 and is formed so as to extend from the inner edge 91e in the substantially perpendicular direction. The light guide plate 9 is housed in the light guide plate housing section 52 of the case 5, the light emitting section 91 thereof is arranged so as to be substantially parallel to the XY plane, and the light guide section 92 is arranged so as to extend along the Z axis direction toward the wiring board 6. Here, in this embodiment, the light emitting section 91 is formed in a plate-like shape, but the present invention is not limited thereto. The shape of the light emitting section is not limited unless it departs from the object of the present invention, for example, a pair of surfaces facing each other (first surface and second surface) are formed in a plate-like shape with a convex or concave curved surface or are formed to have a wedge cross-section such that the thickness gradually decreases toward the outer edge.

In the light guide plate housing section 52, the light emitting section 91 is housed in the first space 521 and the light guide section 92 is housed in the second space 522. At this time, a first surface (hereinafter, referred to as the front surface) 91a of the light emitting section 91 is arranged so as face the rear surface of the dial 4 with a slight spacing interposed therebetween through the opening of the light guide plate housing section 52 on the front side of the case 5. Of course, the front surface 91a of the light emitting section 91 may closely overlap the rear surface of the dial 4. In addition, at the tip end of the light guide section 92 on the opposite side to a base end which is connected to the inner edge 91e of the light emitting section 91, a light incidence surface 92a, on which light of the plural light sources 61 is incident, is provided. This light incidence surface 92a is arranged to face the plural light sources 61 provided on the front surface 6a of the wiring board 6 in an arc shape. The light which is incident on the light incidence surface 92a of the light guide section 92 is guided toward the inner edge 91e of the light emitting section 91 by the light guide section 92.

On a second surface (hereinafter, referred to as the rear surface) 91b of the light emitting section 91, a reflective section 93 is provided. This reflective section 93 is configured by plural reflective bodies 95 which are arranged at intervals and plural reflective surfaces 96 which are arranged between the plural reflective bodies 95. The plural reflective bodies 95 and the plural reflective surfaces 96 are alternately arranged along a direction from the inner edge 91e to an outer edge 91f of the light emitting section 91 (that is, along the radial direction).

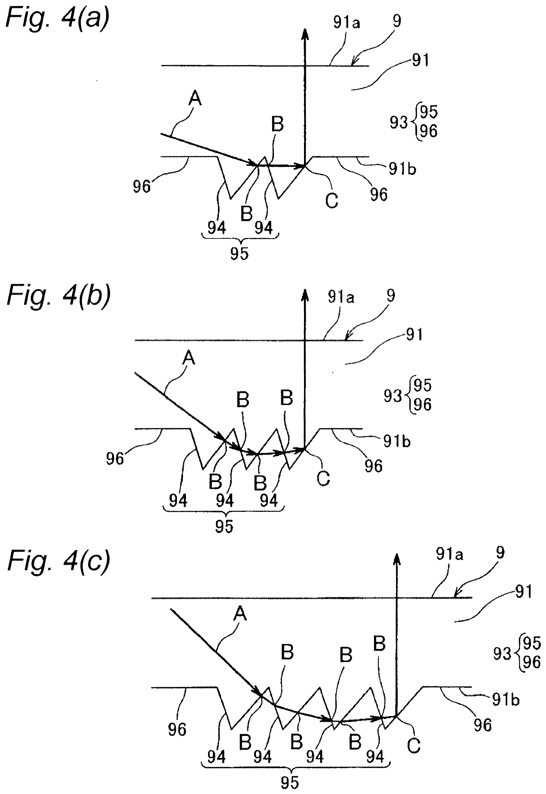

The reflective body 95 includes plural ridges 94 with a wedge cross-section as striated portions, which are continuously provided adjacent to the inner edge 91e and the outer edge 91f of the light emitting section 91 across the space between a first end 91c and a second end 91d facing each other, along a circumferential direction of the light emitting section 91. The reflective body 95 is configured by arranging the plural ridges 94 to be in contact with each other in a width direction thereof (that is, in the radial direction of the light emitting section 91). That is, the ridges 94 are formed to be convex on the rear surface 91b and are arranged in a direction intersecting the traveling direction of light, which travels through the light emitting section 91, so as to be in contact with each other in the width direction of the ridges 94. The ridges 94 functions as a prism to refract or reflect light, incident on a surface thereof, according to an incident angle. The plural ridges 94 are formed to be convex on the rear surface 91b of the light emitting section 91 such that incident light is refracted and reflected to exit the front surface 91a of the light emitting section 91 in a direction perpendicular to the dial 4. Fig. 4(a) to 4(b) are schematic diagrams illustrating states where incident light is refracted and reflected by the plural ridges 94 included in the reflective body 95, so as to exit the front surface 91a of the light emitting section 91 in the direction perpendicular to the dial 4. In Fig. 4(a) to 4(b), A represents light which propagates toward the ridges 94, B represents light which is refracted in the ridges 94 and propagates, and C represents light which is reflected toward the front surface 91a of the light emitting section 91. Here, in the present invention, "the perpendicular direction" includes a substantially perpendicular direction as well as an exactly perpendicular direction, and is not particularly limited as long as it does not depart from the object of the invention and light exits in a predetermined angle range including the direction perpendicular to the dial 4.

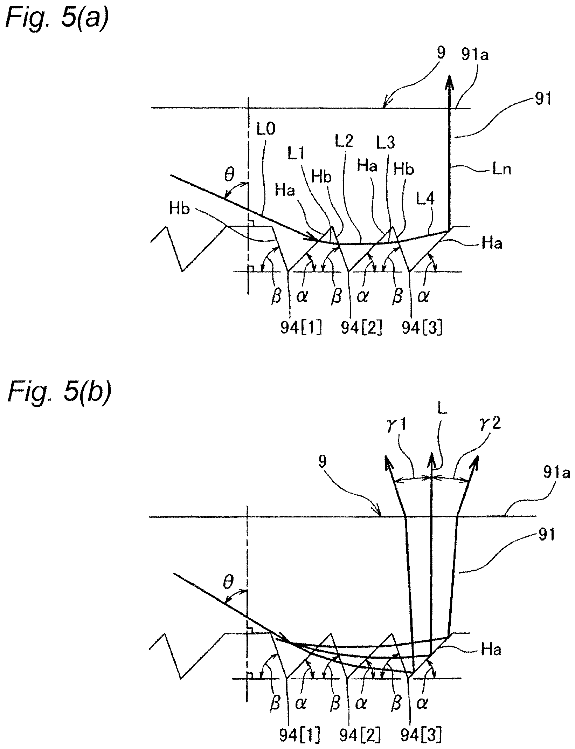

Hereinafter, an example of determining shapes of the plural ridges 94 configuring the reflective body 95 will be described with reference to Fig. 5(a) and 5(b). In Fig. 5(a) and 5(b), the inner edge 91e of the light emitting section 91 of the light guide plate 9 is arranged on the left side and the outer edge 91f thereof is arranged on the right side.

### (Method of Determining Shapes 1: Shapes in Cross-Section of Plural Ridges 94 Are Same)

(Step 1) An incident angle θ of light, which is incident on a portion of the rear surface 91b of the light emitting section 91 where the reflective body 95 is arranged, is calculated. In practice, traveling directions of light components traveling through the light guide plate 9 are different depending on the forms thereof and light components having different intensities are incident on the portion where the reflective body 95 is arranged from plural directions. Therefore, for example, by performing actual measurement using a trial light guide plate or performing an optical simulation using a computer, incident angles of plural light components, which are incident on the portion where the reflective body 95 is arranged, and intensities thereof are calculated and an incident angle of a light component having the highest intensity is set as the incident angle θ. In addition, the average angle of the incident angles of the plural light components may be set as the incident angle θ. In addition, by designing the light guide plate 9 in advance such that the respective portions of the rear surface 91b of the light emitting section 91 have substantially the same incident angle θ, without individually designing the shapes of the reflective bodies 95 for portions having different incident angles θ, the shapes of the reflective bodies 95 are made the same for the respective portions. As a result, the light guide plate 9 can be simply designed.
(Step 2) Next, the shapes and the number of the plural ridges 94 are determined based on the incident angle θ and refractive indices of the air and a material of the light guide plate 9. In general, it is known that: when an incident angle of light incident on a boundary surface between two media having different refractive indices is greater than or equal to a predetermined critical angle which is determined according to the refractive index, the incident light is fully reflected on the boundary surface; and when the incident angle is less than the critical angle, the incident light passes through the boundary surface and is refracted at an angle corresponding to the incident angle and the refractive index. For example, it is assumed that the refractive index of the air is 1.00 and the refractive index of an acrylic resin used as a material of the light guide plate 9 is 1.49. In this case, when light exits the light guide plate 9 with these refractive indices, the critical angle θm of the boundary surface is 42.2. In addition, when light is incident on the light guide plate 9, the critical angle of the boundary surface does not exist. In addition, it is assumed that the reflective body 95 reflects light in a direction in a range of ±30° around the direction exactly perpendicular to the dial 4 (hereinafter, referred to as the reflective range and corresponds to the direction perpendicular to the dial in the first to fourth inventions).
(Step 2-1) A light component L0, which has the incident angle 0 on the rear surface 91b of the light emitting section 91, is incident on a surface Ha of a first ridge 94[1] close to the outer edge 91f of the light emitting section 91. At this time, an angle α between the surface Ha and the rear surface 91b is determined such that the incident angle of the light component L0 on the surface Ha is less than the critical angle θm and the light component L0 is refracted toward the front surface 91a. In addition, an angle β between a surface Hb of the first ridge 94[1] close to the inner edge 91e of the light emitting section 91 and the rear surface 91b is appropriately determined in consideration of the incident angle θ and the width of the reflective surface 96. As a result, as the angle β of the first ridge 94[1] increases, the surface Ha shades the surface Hb and the amount of the incident light component L0 is reduced. In addition, as the angle β decreases, the width of the reflective surface 96 is reduced and the amount of light reflected by the reflective surface 96 is reduced. Therefore, the angle β is determined in consideration of the balance of these characteristics.
(Step 2-2a) The ridges 94 are sequentially added so as to have the same shape in cross-section as that of the first ridge 94[1] which has been determined in Step 2-1. Specifically, a light component L1, which has passed through the surface Ha of the first ridge 94[1], travels through the air and is incident on a surface Hb of a second ridge 94[2]. The second ridge 94[2] having the same shape in cross-section (that is, the same angle α and angle β) as that of the first ridge 94[1] is added and the traveling direction of a light component L2 incident on a surface Hb thereof is obtained. When this light component L2 is reflected from the surface Ha of the second ridge 94[2] toward the reflective range, the reflective body 95 is completed by adding the second ridge 94[2]. On the other hand, when the light component L2 passes through the surface Ha of the second ridge 94[2], a third ridge 94[3] is added and the traveling direction of a light component L4 incident on a surface Hb of the third ridge 94[3] is obtained in the same manner as above. Finally, until light is reflected by the surfaces Ha of the ridges 94 toward the reflective range, the ridges 94 having the same shape in cross-section as that of the first ridge 94[1] are sequentially added.

### (Steps End)

In the above-described method of determining shapes, a case where all the shapes in cross-section of the plural ridges 94 of the reflective body 95 are the same has been described. However, the shapes in cross-section of the plural ridges 94 may be different from each other. In such a case, a method of determining shapes 2 of the plural ridges 94 of the reflective body 95 will be described below.

### (Method of Determining Shapes 2: Shapes in Cross-Section of Plural Ridges 94 Are different)

(Step 1) to (Step 2-1) are the same as those of the above-described method of determining shapes 1.
(Step 2-2b) A light component L1, which has passed through the surface Ha of the first ridge 94[1], travels through the air and is incident on a surface Hb of a second ridge 94[2]. At this time, the incident angle of the light component L1 incident on the surface Hb determines an angle β between the surface Hb and the rear surface 91b is determined such that the light component L1 is refracted toward the front surface 91a by the surface Hb. A light component L2 which has passed through the surface Hb of the second ridge 94[2] travels through the second ridge 94[2] and is incident on a surface Ha. At this time, when the traveling direction of the light component L2 sufficiently faces the front surface 91a, an angle α between the surface Ha and the rear surface 91b is determined such that the incident angle of the light component L2 incident on the surface Ha is greater than or equal to the critical angle θm and the light component L2 is reflected toward the reflective range. On the other hand, when the light component L2 does not sufficiently face the front surface 91a, in the same manner as that of the first ridge 94[1], an angle α between the surface Ha and the rear surface 91b is determined such that the incident angle of the light component L2 incident on the surface Ha is less than the critical angle θm and the light component L2 is refracted toward the front surface 91a.
(Step 2-3) Hereinafter, as necessary, Step 2-2a or 2-2b is repeated. Finally, until the ridges 94 reflect light toward the reflective range, the ridges 94 are sequentially added while the shapes thereof (that is, angles α and angles β) are determined.

### (Steps End)

As the incident angle θ used for the above-described methods of determining shapes, among incident angles of plural light components, which are incident on the portion where the reflective body 95 is arranged, and intensities thereof, an incident angle of a light component having the highest intensity is used. In practice, plural light components having an intensity which is lower than the highest intensity (for example, having an intensity which is 70% or higher of the highest intensity) on the portion where the reflective body 95 is arranged, are incident at incident angles spread out in a given angle range. Therefore, when these plural light components are incident on the reflective body 95, light components, which are reflected toward the front surface of the light emitting section in the reflective body 95, are also reflected and travel in a predetermined angle range, as illustrated in Fig. 5(b).

When this predetermined angle range is set in a range of an angle γ1 to an angle γ2 with respect to the direction exactly perpendicular to the dial 4 (the same direction as that of a light component L in Fig. 5(b)), it is preferable that the shapes of the respective ridges 94 be determined such that the absolute value of the angle γ1 and the absolute value of the angle γ2 are the same (including substantially the same). When these absolute values of the angles are greatly different, a difference between the intensities of light may occur depending on the observation direction. Therefore, by making these absolute values of the angles the same, a difference between the intensities of light components depending on the observation direction can be prevented from occurring.

Hereinabove, the plural ridges 94 (that is, striated convex portions) which are provided to be convex on the rear surface 91b of the light emitting section 91 have been described. However, when plural striated concave portions are provided on the rear surface 91b of the light emitting section 91, the shapes thereof are determined in the same manner.

In particular, by making the shapes in cross-section of the respective ridges 94 the same (that is, by making the angles α and β of the respective ridges 94 the same), the amount of light reflected by the reflective body 95 can be increased by increasing the number of the ridges 94 configuring the reflective body 95. As a result, the light guide plate 9 can be simply designed. For example, in the reflective body 95 illustrated in Fig. 4(a) which are configured by two ridges 94 (in the drawing, the ridges are set as a first ridge 94[1] and a second ridge 94[2] in order from the left side), when the shapes of the respective ridges 94 are the same, a third ridge 94[3] which is the third ridge is added thereto, as illustrated in Fig. 6(a). By doing so, a light component La, which has been incident on the first ridge 94[1] at the incident angle θ, is refracted and reflected by the first ridge 94[1] and the second ridge 94[2]; and furthermore a light component Lb, which has been incident on the second ridge 94[2], is refracted and reflected by the second ridge 94[2] and the third ridge 94[3]. Therefore, the light component Lb, which would have leaked from the second ridge 94[2] toward the rear surface 91b if there were no the third ridge 94[3], is reflected in the direction perpendicular to the dial 4 and the amount of light reflected by the reflective body 95 can increase. In addition, with the above-described configuration, by further adding fourth and fifth ridges 94, the amount of light reflected by the reflective body 95 can increase. In addition, Fig. 6(b) illustrates a state where a fourth ridge 94[4] which is the fourth ridge is added to the reflective body 95 configured by three ridges 94 having the same shape, and Fig. 6(c) illustrates a state where a fifth ridge 94[5] which is the fifth ridge is added to the reflective body 95 configured by four ridges 94 having the same shape. In Fig 6(b) and 6(c), the amount of light reflected by the reflective body 95 can also increase in the same manner as above. In addition, even when plural striated concave portions are provided on the rear surface 91b of the light emitting section 91, the same shall be applied.

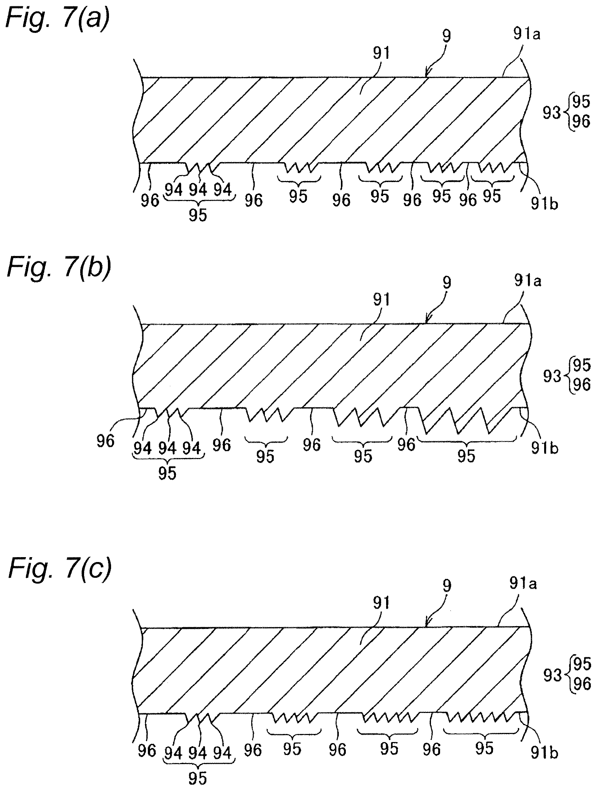

The plural reflective bodies 95 (that is, the plural ridges 94) are arranged as illustrated in Fig. 7(a) to 7(c). In the light emitting sections 91 illustrated in Fig. 7(a) to 7(c), it is assumed that the left side in the drawing has a distance closer to light sources and the right side in the drawing has a distance farther from the light sources. As illustrated in Fig. 7(a), the reflective bodies 95 are arranged such that the intervals thereof (that is, the widths of the reflective surfaces 96) are gradually reduced in a direction away from the light sources (that is, from the inner edge 91e toward the outer edge 91f of the light emitting section 91). Alternatively, for example, as illustrated in Fig. 7(b), the cross-sectional areas (wedges) of the ridges 94 gradually increase in the direction away from the light sources, or as illustrated in Fig. 7(c), the numbers of the plural ridges 94 gradually increase in the direction away from the light sources. In this way, it is preferable that an area in plan view of the reflective body 95 occupied per unit area of the rear surface 91b of the light emitting section 91 (that is, an area when the reflective body 95 is seen from the normal direction of the rear surface 91b) increase in the direction away from the light sources. By doing so, the amount of light reflected by the reflective body 95 increases in proportion to the area in plan view of the reflective body 95, the difference between the intensity of light emitted from a portion which is distant from the light sources 61 of the reflective section 93 and the intensity of light emitted from a portion which is closer to the light sources than the distant portion, can be reduced. As a result, unevenness in the intensity of light, which exit the front surface 91a of the light emitting surface 91, can be prevented and thus the amount of light reflected by the reflective section 93 toward the front surface 91a of the light emitting section 91 can be made uniform across the space from the inner edge 91e to the outer edge 91f of the light emitting section 91.

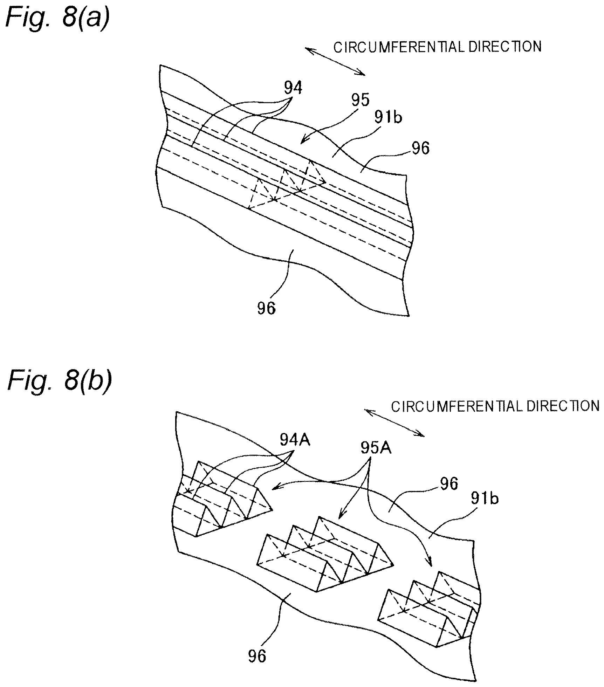

In this embodiment, as illustrated in Fig. 8(a), the reflective body 95 has the plural ridges 94 which are continuously provided across the space from the first end 91c to the second end 91d of the light emitting section 91, but the present invention is not limited thereto. As illustrated in Fig. 8(b), a reflective body 95A is configured by plural short ridges 94A and the plural reflective bodies 95A are provided at intervals along the circumferential direction of the light emitting section 91 across the space from the first end 91c to the second end 91d of the light emitting section 91. Alternatively, the reflective bodies 95A, each of which is formed of the plural short ridges 94A, may be arranged on the rear surface 91b of the light emitting section 91 in a regular pattern (rectangular arrangement, hexagonal lattice-shaped arrangement, or the like) as illustrated in Fig. 9(a) and 9(b), or may be randomly arranged as illustrated in Fig. 9(c). In addition, as illustrated in Fig. 9(d), the reflective bodies 95A, each of which is formed of plural short ridges, may have different numbers, shapes (lengths and shapes in cross-section), or the like depending on arrangement positions on the rear surface 91b of the light emitting section 91.

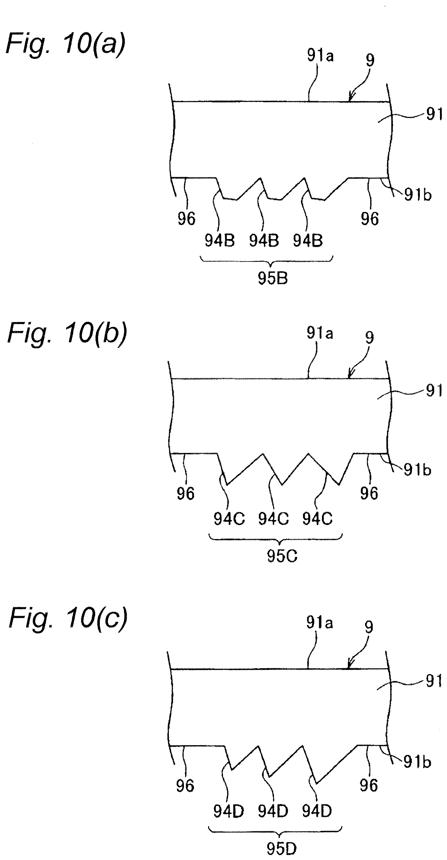

In addition, in this embodiment, the plural ridges 94 included in the reflective body 95 are formed in a wedge shape in cross-section, but the present invention is not limited thereto. For example, as illustrated in Fig. 10(a), plural ridges 94B included in a reflective body 95B are formed in a polygonal shape, such as a quadrangular shape, in cross-section; as illustrated in Fig. 10(b), plural ridges 94C included in a reflective body 95C are formed such that tip ends thereof have different directions; and as illustrated in Fig. 10(c), plural ridges 94D included in a reflective body 95D are formed such that the respective sizes (cross-sectional areas) are different. Alternatively, the surfaces (the surface Ha and the surface Hb described above) of the respective ridges may be curved or the above-described configurations may be combined. In this way, the shapes of the plural ridges 94 are random as long as they are formed such that incident light is refracted and reflected to be emitted in the direction perpendicular to the dial 4 of the light emitting section 91.

The reflective surface 96 is a smooth and elongated flat section which is provided across the space from the first end 91c to the second end 91d of the light emitting section 91 along the circumferential direction of the light emitting section 91. The reflective surfaces 96 are arranged between the plural reflective bodies 95 and specularly reflects light, which is obliquely incident, to guide the light toward the outer edge 91f of the light emitting section 91.

As described above, the reflective section 93 is a section that reflects light, which travels from the inner edge 91e to the outer edge 91f of the light emitting section 91, toward the front surface 91a with the reflective bodies 95 thereof such that light exits the front surface 91a. The configurations (that is, for example, the numbers and arrangements of the reflective bodies 95 and the reflective surfaces 96) of the reflective section 93 are appropriately determined according to the configurations of the speedometer 1 such as the arrangement of the indicators 42, 43, and 44 provided in the dial 4.

In the light guide plate 9, light, which is incident on the light incidence surface 92a from the light sources 61, travels from the tip end to the base end of the light guide section 92 and is guided to the inner edge 91e of the light emitting section 91 with the light guide section 92 and the light emitting section 91 as an optical path; travels from the inner edge 91e to the outer edge 91f of the light emitting section 91 (that is, along the radial direction); is reflected in the direction perpendicular to the dial 4 by the reflective section 93; and exits the front surface 91a.

The rear cover (not illustrated in the drawings) is configured by, for example, a synthetic resin, and is a container with a substantially U-shape in cross-section including a bottom wall portion which has substantially the same front shape as that of the case 5 and a side wall portion which is vertically provided on the periphery of the bottom wall portion. The rear cover is arranged so as to cover the rear surface 6b of the wiring board 6 and is attached to the case 5 by fixing means, such as a self-tapping screw, not illustrated in the drawings.

The front glass (not illustrated in the drawings) is arranged so as to cover the facing plate 2, the decorative ring member 3, and the dial 4 and is attached to the case 5 by fixing means, such as a locking claw, not illustrated in the drawings. The rear cover and the front glass prevent dust and the like from entering the speedometer 1.

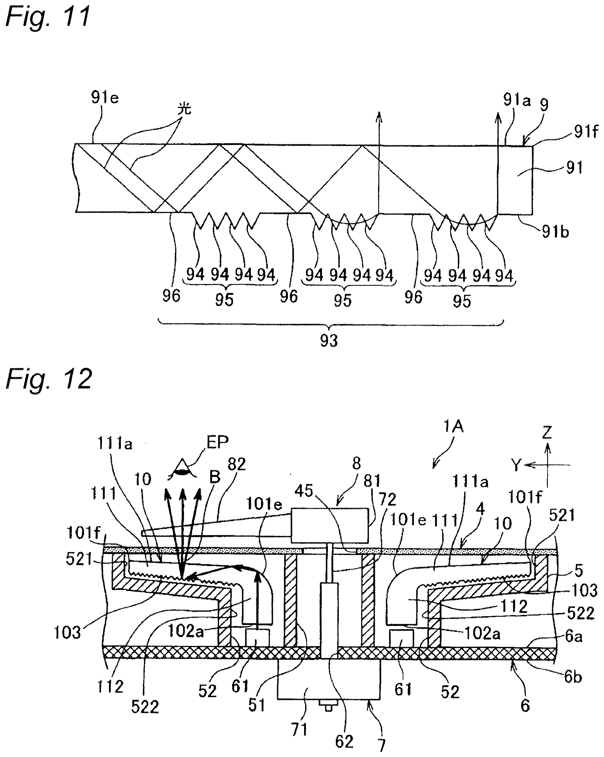

Next, the operation according to the present invention in the above-described speedometer 1 (light guide plate 9) will be described with reference to Fig. 11.

In the speedometer 1, light, which is emitted from the light sources 61, is incident on the light incidence surface 92a of the light guide section 92 of the light guide plate 9 and is guided to the inner edge 91e of the light emitting section 91 by the light guide section 92. The light, which is guided to the inner edge 91e of the light emitting section 91, is reflected by the front surface 91a of the light emitting section 91 and the reflective surfaces 96, and travels from the inner edge 91e to the outer edge 91f of the light emitting section 91. When a light component having an incident angle θ on the rear surface 91b among light components traveling through the light emitting section 91 is incident on the reflective body 95, the plural ridges 94 configuring the reflective body 95 cause the incident light to pass therethrough while refracting the light toward the front surface 91a and reflects the light in the direction perpendicular to the dial 4. The light which is reflected by the reflective bodies 95 exits the front surface 91a.

As described above, according to the present invention, in the reflective section 93 provided in the light emitting section 91, the plural reflective bodies 95 formed of the plural ridges 94, which are arranged along the circumferential direction of the light emitting section 91 (that is, along the direction intersecting the traveling direction of light traveling through the light emitting section 91) so as to be in contact with each other in the width direction thereof and to be convex on the rear surface 91b, are provided at intervals. In addition, the plural ridges 94 cause incident light to pass therethrough while refracting the light toward the front surface 91a and reflects the light in the direction perpendicular to the dial 4. Therefore, light traveling through the light emitting section 91 can be refracted and reflected by the reflective section 93 and exit the front surface 91a in the direction perpendicular to the dial 4. As a result, the intensity of light in the front direction can be sufficiently secured without using a member, such as a prism sheet, for correcting the traveling direction of light. Therefore, the number of components can be reduced and the manufacturing cost can be reduced.

In addition, the reflective bodies 95 are arranged such that the intervals thereof (that is, the widths of the reflective surfaces 96) are gradually reduced in the direction away from the light sources 61, that is, such that a ratio of an area in plan view of the reflective body 95 occupied per unit area of the rear surface 91b increases in the direction away from the light sources. Therefore, the amount of light reflected by the reflective body 95 increases in proportion to the area in plan view of the reflective body 95, the difference between the intensity of light emitted from a portion which is distant from the light sources 61 of the reflective section 93 and the intensity of light emitted from a portion which is closer to the light sources than the distant portion, can be reduced. As a result, unevenness in the intensity of light, which exit the front surface 91a of the light emitting surface 91, can be prevented.

In addition, the plural ridges 94 included in the reflective body 95 are continuously provided across the space between the first end 91c and the second end 91d (that is, both ends) facing each other adjacent to the inner edge 91e and the outer edge 91f of the light emitting section 91. The configuration of the reflective section 93 is simpler than a case where the plural ridges 94 are discretely arranged at intervals along the direction connecting the first end 91c and the second end 91d of the light emitting section 91. As a result, a die used for the manufacture of the light guide plate 9 can be manufactured at low cost, thereby reducing the manufacturing cost of the light guide plate 9.

### (Second Embodiment)

Hereinafter a speedometer including a light guide plate according to a second embodiment of the present invention will be described with reference to Figs 12 to 16(b). As illustrated in the Fig. 12, a speedometer as an indicating instrument (in the drawing, represented by reference numeral 1A) includes the facing plate 2, the decorative ring member 3, the dial 4, the case 5, the wiring board 6, the internal rotating mechanism 7, the indicating member 8, a light guide plate 10, the rear cover not illustrated in the drawings, and the front glass not illustrated in the drawings. Since the speedometer 1A has the same configuration as that of the above-described first embodiment other than the light guide plate 10, the same components are represented by the same reference numerals and the descriptions thereof will be omitted.

The light guide plate 10 is configured using, for example, a high-transparency material such as acrylic resin and a surface thereof is formed to be smooth. Therefore, the light guide plate 9 is a member for guiding light, which is incident on the inside thereof, along the shape thereof. The light guide plate 10 includes plural light guide components 100.

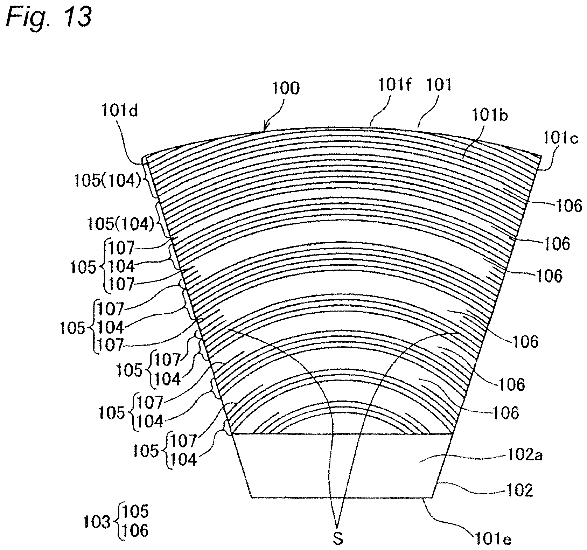

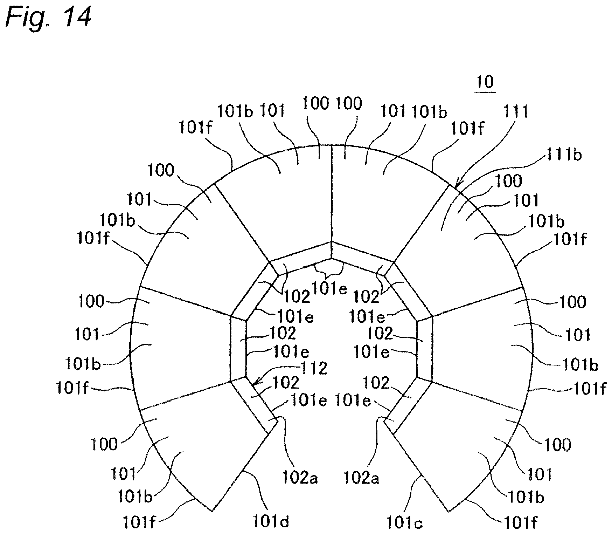

Fig. 13 is a rear view of the light guide component 100 (that is, a diagram of the light guide component 100 described below when seen from a rear surface 101b of a first part 101). The light guide component 100 includes a first part 101 that is formed of a plate having an fan shape in plan view; and a second part 102 that is connected along an inner edge 101e of the first part 101 and is formed of a rectangular plate so as to extend from the inner edge 101e in the substantially perpendicular direction. In addition, regarding ends 101c and 101d which face each other adjacent to the inner edge 101e and an outer edge 101f of the first part 101, the respective ends 101c and ends 101d in the plural light guide components 100 are joined to each other between the respective light guide components 100 (that is, a first end 101c of a light guide component 100 is joined to a second end 101d of another light guide component). As illustrated in Fig. 14, in the same manner as that of the first embodiment, the light guide plate 10 is configured to include a light emitting section 111 that is formed of a plate having an arc shape in plan view; and a substantially semi-cylindrical light guide section 112 that is connected along the inner edge (that is, the inner edge 101e of the first part 101) of the light emitting section 111 and is formed so as to extend from the inner edge in the substantially perpendicular direction. In addition, in the same manner as that of the above-described first embodiment, the light guide plate 10 is housed in the light guide plate housing section 52 of the case 5. Here, in Fig. 14, a reflective section 103 is not illustrated.

A first surface (hereinafter, referred to as the front surface) 101a of the first part 101 of the light guide component 100 configures a front surface 111a of the light emitting section 111 and is arranged so as face the rear surface of the dial 4 with a slight spacing interposed therebetween through an opening of the light guide plate housing section 52 on the front side of the case 5. In addition, at a tip end of the second part 102 of the light guide component 100 on the opposite side to a base end which is connected to the inner edge 101e of the first part 101, a light incidence surface 102a, on which light of the light sources 61 is incident, is provided. This light incidence surface 102a is arranged to face a light source 61, which is arranged to correspond to the light guide component 100, among the plural light sources 61 provided on the front surface 6a of the wiring board 6. The light which is incident on the light incidence surface 102a is guided toward the inner edge 101e of the first part 101 by the second part 102.

A second surface (hereinafter, referred to as the rear surface) 101b of the first part 101 configures the rear surface 111b of the light emitting section 111 and the reflective section 103 is provided thereon. As illustrated in Fig. 13, this reflective section 103 is configured by plural reflective bodies 105 which are arranged at intervals and plural reflective surfaces 106 between the plural reflective bodies 105. The plural reflective bodies 105 and the plural reflective surfaces 106 are alternately arranged along a direction from the inner edge 101e to the outer edge 101f of the first part 101 (that is, along the radial direction).

In the same manner as that of the above-described first embodiment, the reflective body 105 includes plural ridges 104 with a wedge cross-section, which are continuously provided across the space between the first end 101c and the second end 101d of the first part 101 facing each other, along a circumferential direction of the first part 101. The reflective body 105 is configured by arranging the plural ridges 104 to be in contact with each other in a width direction thereof (that is, in the radial direction of the first part 101). The plural ridges 104 are formed to have the same shape in cross-section (that is, have the same angle α and angle β). Of course, the plural ridges 104 may be formed to have different shapes in cross-section. The plural ridges 104 are formed to be convex on the rear surface 101b of the first part 101 such that incident light is refracted and reflected to be emitted in a direction perpendicular to the dial 4.

Incidentally, in the speedometer 1A, as the light sources 61, a light-emitting diode is used. The light-emitting diode includes a light emitting element made of a semiconductor and a translucent resin which seals the light emitting element. The translucent resin has a light collecting structure, such as a lens, for improving the intensity of light in the front direction of the light-emitting diode. Therefore, the light source 61 formed of the light-emitting diode can secure a high intensity of light in the front direction, but the intensity of light deteriorates in a direction away from the front direction. As a result, in the first part 101 of the light guide component 100, unevenness in the intensity of light occurs and positions having low intensity of light are generated. The positions having low intensity are determined according to the amount and angle (directional angle) of light emitted from the light sources 61, the arrangement thereof, or the translucency, shape or the like of the light guide component 100.

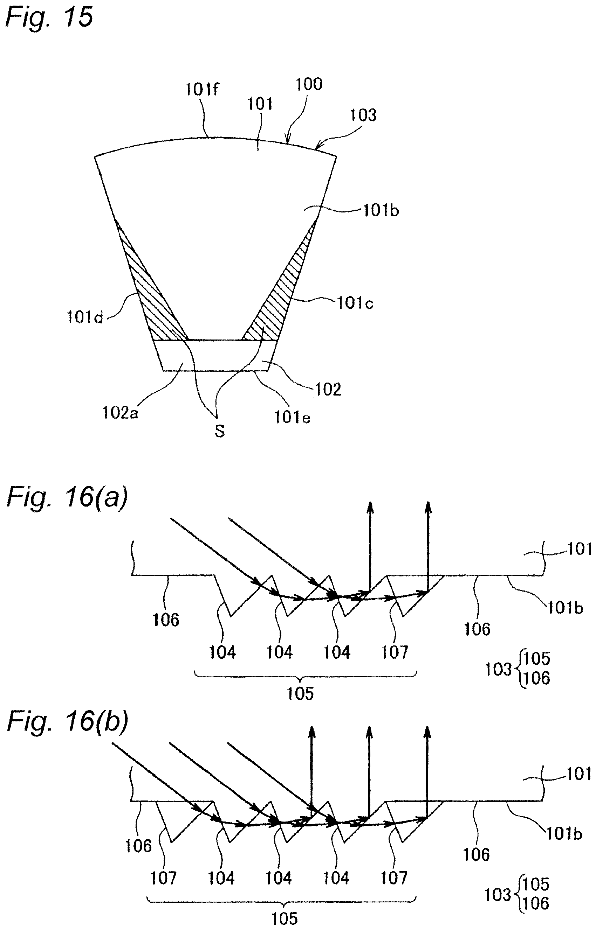

With regard to such unevenness in the intensity of light, for example, by performing actual measurement using a trial light guide plate or performing an optical simulation using a computer, positions S (indicated by hatched line; and hereinafter, referred to as the low-intensity positions S) where the intensity of light traveling through the first part 101 (that is, the light emitting section 111) is lower than a predetermined reference value (for example, an intensity which is 70% of the intensity of light emitted from the light sources 61 in the front direction) are determined in advance. In portions of the plural reflective bodies 105 where the low-intensity positions S are arranged, auxiliary ridges 107 as auxiliary striated portions are provided. For example, as illustrated in Fig. 15, such low-intensity positions S are formed such that the width thereof is gradually reduced in a direction from the inner edge 101e toward the outer edge 101f along the both ends 101c and 101d of the first part 101.

As illustrated in Fig. 13, in the portions of the plural reflective bodies 105 where the low-intensity positions S are arranged, the auxiliary ridges 107 are arranged so as to be in contact with the ridges 104 which are positioned at end of the reflective bodies 105 in a width direction thereof. In this embodiment, the auxiliary ridges 107 have the same shapes in cross-section as that of the above-described ridges 104. As illustrated in Fig. 16(a), only one auxiliary ridge 107 may be provided at an end of the reflective body 105 in the width direction. Alternatively, as illustrated in Fig. 16(b), plural auxiliary ridges 107 may be provided so as to interpose the reflective body 105 therebetween in the width direction. The number and shape thereof are determined according to the intensity of light in the low-intensity positions S and the like. By providing the auxiliary ridge 107 in this way, light can be emitted in the direction perpendicular to the dial 4 by the auxiliary ridges 107, ridges 104 which are arranged halfway among the plural ridges 104, and the like. Of course, the auxiliary ridges 107 may have different shapes in cross-section from those of the ridges 104 as long as they are formed such that light is emitted in the direction perpendicular to the dial 4 by the auxiliary ridges 107, the ridges 104 which are arranged halfway, and the like. As a result, light exits the front surface 91a corresponding to the low-intensity positions S of the light emitting section 91 and the intensity of light can be improved.

The reflective surface 106 is a smooth and elongated flat section which is provided across the space from the first end 101c to the second end 101d of the first part 101 along the circumferential direction of the first part 101. The reflective surfaces 106 are arranged between the plural reflective bodies 105 and specularly reflects light, which is obliquely incident, to guide the light toward the outer edge 101f of the first part 101.

As described above, the reflective section 103 is a section that reflects light, which travels from the inner edge 101e to the outer edge 101f of the first part 101, toward the front surface 101a with the reflective bodies 105 thereof such that light exits the front surface 101a. The configurations (that is, for example, the numbers and arrangements of the reflective bodies 105 and the reflective surfaces 106) of the reflective section 103 are appropriately determined according to the configurations of the speedometer 1A such as the arrangement of the indicators 42, 43, and 44 provided in the dial 4.

In the light guide plate 10, light, which is incident on the light incidence surface 102a from the light sources 61, travels from the tip end (the light incidence surface 102a) to the base end of the second part 102 and is guided to the inner edge 101e of the first part 101 with the second part 102 (the light guide section 112) and the first part 101 (the light emitting section 111) as an optical path; travels from the inner edge 101e to the outer edge 101f of the first part 101; is reflected in the direction perpendicular to the dial 4 by the reflective section 103; and exits the front surface 101a.

Next, the operation according to the present invention in the above-described speedometer 1A (light guide plate 10) will be described.

In the speedometer 1A, light, which is emitted from the light sources 61, is incident on the light incidence surface 102a of the light guide plate 10 (that is, the light guide component 100) and is guided to the inner edge 101e of the first part 101 by the second part 102. The light, which is guided to the inner edge 101e of the first part 101, is reflected by the front surface 101a of the first part 101 by the reflective surfaces 106, and travels from the inner edge 101e to the outer edge 101f of the first part 101. At this time, due to the characteristics of the light sources 61, the positions S (low-intensity positions) where the intensity of light traveling through the first part 101 is low are generated in both ends 101c and 101d of the first part 101, but in the portions of the plural reflective bodies 105 where the low-intensity positions S are arranged, the auxiliary ridges 107 are provided. Due to the auxiliary ridges 107, a greater amount of light can be reflected in the direction perpendicular to the dial 4. As a result, the intensity of light, which exits the front surface 101a of the first part 101 corresponding to the low-intensity positions S, can be made the same as that of positions other than the low-intensity positions S.

As described above, according to the present invention, in portions of the reflective bodies 105, which are arranged at positions where the intensity of light traveling through the first part 101 (that is, the light emitting section 111) is lower than a predetermined reference value, one or plural auxiliary ridges 107 are provided so as to be in contact with the plural ridges 104 of the reflective bodies 105 in the width direction. Therefore, in the positions (low-intensity positions S) where the intensity of light traveling through the first part 101 is lower than a predetermined reference value, a greater amount of light can exit the front surface 101a in the direction perpendicular to the dial 4 by the auxiliary ridges 107. As a result, the intensity of light, which exits the front surface 101a of the first part 101 corresponding to the positions, can be made the same as that of the other positions, thereby preventing unevenness in the intensity of light which exits the front surface 101a of the first part 101. In addition, by adjusting the number of the auxiliary ridges 107 according to a position in the low-intensity positions S, the intensity of light which exits the front surface 101a can be adjusted for each position and thus unevenness in the intensity of light in the low-intensity positions S can be improved. Furthermore, in addition to the above-described effects, the same effects as those of the first embodiment can be obtained.

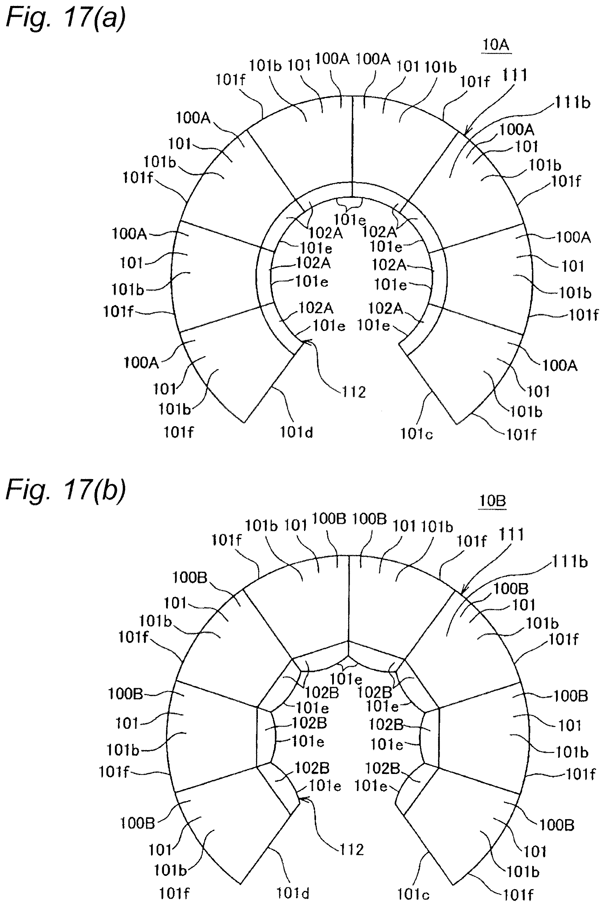

In the above-described second embodiment, in the light guide plate 10, the second part 102 of the light guide component 100 is formed of a rectangular plate, but the present invention is not limited thereto. For example, as illustrated in Fig. 17(a), in a light guide plate 10A, the cross-section of a second part 102A of a light guide component 100A may be formed in an arc shape so as to be curved along the circumferential direction of the first part 101; or as illustrated in Fig. 17(b), in a light guide plate 10B, a second part 102B of a light guide component 100B may be formed such that a surface, which is positioned in a direction away from the first part 101, is curved to be convex. Alternatively, in the same manner as that of the light guide plate 9 according to the first embodiment, the light guide plate may include a light emitting section formed of a plate having an arc shape in plan view and a light guide section connected to an inner edge of the light emitting section, both of which are integrally formed. In such light guide plates, the low-intensity positions are obtained in the same manner as above and the above-described auxiliary ridges are provided in portions of the low-intensity positions of reflective bodies, thereby obtaining the same effects as above. In Figs. 17 (a) and 17(b), the reflective section 103 is not illustrated.

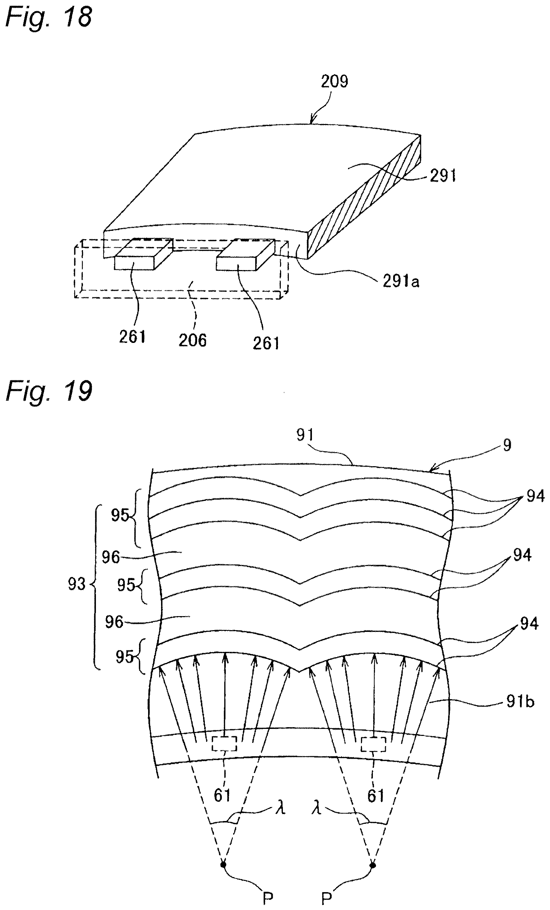

In addition, in the above-described respective embodiments, the light guide plate 9 (hereinafter, the same shall be applied to the light guide plate 10) includes the light guide plate 92 which is connected along the end (that is, the inner edge 91e) of the light emitting section and is formed so as to extend from the end in the substantially perpendicular direction, but the present invention is not limited thereto. For example, as in a part of configuration illustrated in Fig. 18, a light guide plate 209 may be formed of only a plate having an arc shape in plan view. In this light guide plate 209, light, which is emitted from plural light sources 261 provided in a wiring board 206, is incident on a first surface 291a provided an inner edge of a plate-like portion 291. Then, the incident light is reflected toward a front surface 291b by the same reflective section as that of the above-described embodiments which is provided on the rear surface of the plate-like portion 291 and is not illustrated in the drawing and exit the front surface 291b. In such a configuration, the plate-like portion 291 corresponds to the light emitting section according to the first to fourth inventions, the first surface 291a of the plate-like portion 291 corresponds to the light incidence surface and the light guide section, and the light emitting section and the light guide section are connected to each other in the wider sense.

In addition, in the above-described respective embodiments, the plural ridges 94 included in the reflective body 95 (hereinafter, the same shall be applied to the reflective body 105) are provided along the circumferential direction of the light guide section 91, but the present invention is not limited thereto. As illustrated in Fig. 19, the respective ridges 94 may be provided along positions which are equally distant from a imaginary light source P (that is, on a concentric circle around the imaginary light source P), which is a convergence point of a spread angle λ at which light emitted from the respective light sources 61 is spread out on the light emitting section 91 in the planar direction. By providing the ridges 94 in this way, light which radiates from the imaginary light source P is incident on the respective ridges 94 in a direction perpendicular thereto in plan view. Therefore, the incident light can be uniformly refracted and reflected in the direction perpendicular to the dial 4 (so as to be further parallel to the Z axis direction). This spread angle λ is determined according to the shape of the light guide plate 9 and the amount and angle (directional angle) of light emitted from the light sources 61.

In addition, in the above-described respective embodiments, the reflective body 95 (hereinafter, the same shall be applied to the reflective body 105) is configured by the plural ridges 94 formed to be convex on the rear surface 91b, but the present invention is not limited thereto. The reflective body 95 may be configured by plural striated portions formed to be concave on the rear surface 91b, for example, may be configured by plural furrows having a V-shape in cross-section. The reflective body 95, which is configured by the plural furrows 97 as such striated portions, is illustrated in Fig. 20. In Fig. 20, A represents light which propagates toward the **furrows 97**, B represents light which is refracted in the **furrows 97** and propagates, and C represents light which is reflected toward the front surface 91a of the light emitting section 91A.

The above-described embodiments are merely representative forms of the present invention and the present invention is not limited to the above-described embodiments. That is, various modifications can be made in a range not departing from the scope of the present invention.

The present invention has been described with reference to the specific embodiments. However, it is apparent to those skilled in the art that various modifications and alternations can be made without departing from the gist and scope of the present invention.

The present invention is based on Japanese Patent Application (Patent Application No. 2010-088891), the contents of which are incorporated by reference.

### Industrial Applicability

A light guide plate according to the present invention and an indicating instrument with the same can obtain an effect of sufficiently securing the intensity of light in the front direction, without using a member, such as a prism sheet, for correcting the traveling direction of light.

### Reference Signs List

1 speedometer (indicating instrument)
4 dial
42, 43, 44 indicator (translucent design)
9 light guide plate
91 light emitting section
91a front surface of light emitting section (first plane)
91b rear surface of light emitting section (second plane)
92 light guide section
92a light incidence surface
93 reflective section
94, 94A, 94B, 94C, 94D ridge (striated portion)
95, 95A, 95B, 95C, 95D reflective body
96 reflective surface
97 furrow (striated portion)
1A speedometer (indicating instrument)
10, 10A, 10B light guide plate
100 light guide component (light guide plate)
101 first part (light guide section)
101a front surface of first part (first plane)
101b rear surface of first part (second plane)
102 second part (light guide section)
104 ridge (striated portion)
105 reflective body
106 reflective surface
107 auxiliary ridge (auxiliary striated portion)
111 light guide section
111a front surface of light emitting section (first plane)
111b rear surface of light emitting section (second plane)
112 light guide section

## Claims

1. Arrangement of a light guide plate (9) and a dial (4), wherein the light guide plate (9) comprises:
a light emitting section (91) that is arranged so as to overlap the dial (4) which is provided with translucent designs;
a light guide section (92) that is connected to the light emitting section (91) and has a light incidence surface (92a) on which light of a light source (61) is incident; and
a reflective section (93) that reflects light, which is guided to the light emitting section (91) by the light guide section (92), toward a first surface (91a) facing the dial (4) of the light emitting section (91), and is provided on a second surface (91b) facing the first surface (91a) of the light emitting section (91),
wherein the reflective section (93) is configured by plural reflective bodies (95) which are arranged at intervals and plural reflective surfaces (96) which are arranged between the plural reflective bodies (95), the reflective body (95) includes plural striated portions and the reflective body (95) is configured by arranging the plural striated portions to be in contact with each other in a width direction thereof,
the striated portions are formed on the second surface (91b) and are arranged in a direction intersecting the traveling direction of incident light, which can travel through the light emitting section (91), so as to be in contact with each other in the width direction of the striated portions,
the striated portions are plural ridges (94) with a wedge cross-section or plural furrows (97) having a V-shape in cross-section,
the incident light can pass through the striated portions while the light can be refracted toward the first surface (91a), and then can be reflected in a direction perpendicular to the dial (4),
wherein, one or a plurality of auxiliary striated portions (107) are provided only in a low-intensity portion (S) of the reflective body (95) so as to be in contact with the striated portions of the reflective body (95) in a width direction thereof, and the low-intensity portion (S) is formed such that the width thereof is gradually reduced in a radial direction of the light guide plate (100) and is arranged at a position where an intensity of light traveling through the light emitting section (91) is lower than a predetermined reference value.

2. The arrangement according to Claim 1,
wherein the reflective body (95) is provided so that a ratio of an area in plan view of the reflective body (95) occupied per unit area of the second surface (91b) increases in a direction away from the light source (61).

3. An indicating instrument (1A) comprising:
a dial (4) that is provided with translucent designs; and
a light guide plate (9) that is arranged so as to overlap a rear surface of the dial (4),
wherein the light guide plate (9) is the light guide plate (9) according to claim 1 or 2.

4. The arrangement according to Claim 1, wherein
one of the striated portions (94) has an outer surface (Ha) which is close to an outer edge (91f) of the light emitting section (91) and on which the light is incident, and a first angle (α) between the outer surface (Ha) and the second surface (91b) is determined so that an incident angle (θ) of the light on the outer surface (Ha) is less than a critical angle of the outer surface (Ha) and the light can be refracted toward the first surface (91a).

5. The arrangement according to Claim 4, wherein
the one of the striated portions (94) has an inner surface (Hb) which is close to an inner edge (91e) of the light emitting section (91), and a second angle (β) between the inner surface (Hb) and the second surface (91b) is determined in consideration of the incident angle (θ) and a width of the reflective surface (96).

6. The arrangement according to Claim 5, wherein
another one of the striated portions (94[2]) has the same first angle (α) and the same second angle (β) as those of the one of the striated portions (94[1]).

## Patentansprüche

1. Anordnung aus einer Lichtleitplatte (9) und einer Rundskala (4), wobei die Lichtleitplatte (9) umfasst:
einen lichtemittierende Abschnitt (91), der so angeordnet ist, dass er die Rundskala (4) überlappt, die mit einem durchscheinenden Design versehen ist;
einen Lichtleitabschnitt (92), der mit dem lichtemittierenden Abschnitt (91) verbunden ist und eine Lichteinfallsfläche (92a) aufweist, auf welche Licht von einer Lichtquelle (61) einfällt; und
einen Reflexionsabschnitt (93), der Licht, das von dem Lichtleitabschnitt zu dem lichtemittierenden Abschnitt (91) geleitet wird, in Richtung einer ersten Oberfläche (91a) reflektiert, die zu der Rundskala (4) des lichtemittierenden Abschnitts (41) ausgerichtet ist, und der auf einer zweiten Oberfläche (91b) bereitgestellt ist, die zu der ersten Oberfläche (91a) des lichtemittierenden Abschnitts (eine 90) ausgerichtet ist,
wobei der Reflexionsabschnitt (93) von zahlreichen reflektierenden Körpern (95) konfiguriert wird, die in Intervallen angeordnet sind, und mehreren reflektierenden Oberflächen (96), die zwischen den zahlreichen reflektierenden Körpern (90) angeordnet sind, wobei der reflektierende Körper (95) zahlreiche gefurchte Abschnitte beinhaltet und der reflektierende Körper (95) durch Anordnen der zahlreichen gefurchten Abschnitte solcherart konfiguriert wird, dass sie miteinander in einer Breitenrichtung in Kontakt stehen,
wobei die gefurchten Abschnitte auf der zweiten Oberfläche (91b) ausgebildet und in einer Richtung angeordnet sind, welche die Verlaufsrichtung des einfallenden Lichts kreuzt, das durch den lichtemittierenden Abschnitt (91) verlaufen kann, so dass sie in der Breitenrichtung der gefurchten Abschnitte miteinander in Kontakt stehen,
wobei die gefurchten Abschnitte zahlreiche Erhöhungen (94) mit einem keilförmigen Querschnitt oder zahlreiche Furchen (97) mit einem V-förmigen Querschnitt sind, wobei das einfallende Licht durch die gefurchten Abschnitte verlaufen kann, während das Licht in Richtung der ersten Oberfläche (91a) gebrochen werden und dann anschließend in einer Richtung lotrecht zu der Rundskala (4) reflektiert werden kann,
wobei einer oder eine Vielzahl von zusätzlichen gefurchten Abschnitten (107) nur in einem Abschnitt mit niedriger Intensität (S) des reflektierenden Körpers (95) vorgesehen ist, so dass sie mit den gefurchten Abschnitten des reflektierenden Körpers (95) in einer Breitenrichtung davon in Kontakt stehen, und der Abschnitt mit niedriger Intensität (S) so ausgebildet ist, dass seine Breitenrichtung in einer radialen Richtung der Lichtleitplatte (100) allmählich reduziert wird und er an einer Position angeordnet ist, an der die Intensität des Lichts, das durch den lichtemittierenden Abschnitt (91) verläuft, geringer als ein vorgegebener Referenzwert ist.

2. Anordnung nach Anspruch 1,
wobei der reflektierende Körper (95) so angeordnet ist, dass ein Verhältnis einer Fläche in der Draufsicht des reflektierenden Körpers (95), die pro Einheitsfläche der zweiten Oberfläche (91b) besetzt ist, in einer Richtung weg von der Lichtquelle (61) größer wird.

3. Anzeigeinstrument (1A), umfassend:
eine Rundskala (4), die mit einem durchscheinenden Design versehen ist; und
eine Lichtleitplatte (9), die so angeordnet ist, dass sie eine Rückseite der Rundskala (4) überlappt,
wobei die Lichtleitplatte (9) die Lichtleitplatte (9) nach Anspruch 1 oder 2 ist.

4. Anordnung nach Anspruch 1, wobei
einer der gefurchten Abschnitte (94) eine Außenfläche (Ha) aufweist, die sich nahe einem äußeren Rand (91f) des lichtemittierenden Abschnitts (91) befindet, und auf die Licht einfällt, und ein erster Winkel (α) zwischen der Außenfläche (Ha) und der zweiten Fläche (91b) so bestimmt wird, dass ein Einfallswinkel (θ) des Lichts auf die Außenfläche (Ha) kleiner als ein Grenzwinkel der Außenfläche (Ha) ist und das Licht in Richtung der ersten Oberfläche (91a) gebrochen werden kann.

5. Anordnung nach Anspruch 4, wobei
der eine der gefurchten Abschnitte (94) eine Innenfläche (Hb) aufweist, die sich nahe einem inneren Rand (91e) des lichtemittierenden Abschnitts befindet, und ein zweiter Winkel (β) zwischen der Innenfläche (Hb) und der zweiten Fläche (91b) unter Berücksichtigung des Einfallswinkels (θ) und einer Breite der reflektierenden Oberfläche (96) bestimmt wird.

6. Anordnung nach Anspruch 5, wobei
ein anderer der gefurchten Abschnitte (94[2]) denselben ersten Winkel (α) und denselben zweiten Winkel (β) wie der eine der gefurchten Abschnitte (94[1]) aufweist.

## Revendications

1. Ensemble de plaque de guide de lumière (9) et d'un cadran (4), dans lequel la plaque de guide de lumière (9) comprend:
une section d'émission de lumière (91) qui est agencée de façon à chevaucher le cadran (4) qui est muni de motifs translucides;
une section de guide de lumière (92) qui est connectée à la section d'émission de lumière (91) et présente une surface d'incidence de lumière (92a) sur laquelle la lumière d'une source de lumière (61) est incidente; et
une section réfléchissante (93) qui réfléchit la lumière, qui est guidée vers la section d'émission de lumière (91) par la section de guide de lumière (92), vers une première surface (91a) faisant face au cadran (4) de la section d'émission de lumière (91), et est prévue sur une seconde surface (91b) faisant face à la première surface (91a) de la section d'émission de lumière (91),
dans lequel la section réfléchissante (93) est configurée par plusieurs corps réfléchissants (95) qui sont disposés par intervalles et plusieurs surfaces réfléchissantes (96) qui sont disposées entre les plusieurs corps réfléchissants (95), le corps réfléchissant (95) comprend plusieurs portions striées et le corps réfléchissant (95) est configuré en agençant les plusieurs parties striées devant être en contact les unes avec les autres dans le sens de la largeur de celui-ci,
les parties striées sont formées sur la seconde surface (91b) et sont agencées dans une direction coupant la direction de déplacement de la lumière incidente, qui peut traverser la section d'émission de lumière (91), de manière à se trouver en contact les unes avec les autres dans la largeur direction des portions striées,
les parties striées sont des arêtes multiples (94) avec une section en coin ou plusieurs sillons (97) ayant une section en forme de V,
la lumière incidente peut traverser les portions striées tandis que la lumière peut être réfractée vers la première surface (91a), puis réfléchie dans une direction perpendiculaire au cadran (4),
dans lequel une ou plusieurs parties striées auxiliaires (107) sont prévues uniquement dans une partie de faible intensité (S) du corps réfléchissant (95) de manière à être en contact avec les parties striées du corps réfléchissant (95) dans une direction de largeur de celui-ci, et la partie de faible intensité partie (S) est formée de sorte que sa largeur est progressivement réduite dans une direction radiale de la plaque de guide de lumière (100) et est disposée dans une position dans laquelle une intensité de lumière traversant la section d'émission de lumière est inférieure à la valeur de référence prédéterminée.

2. Ensemble selon la revendication 1,
dans lequel le corps réfléchissant (95) est prévu de telle sorte qu'un rapport d'une surface en vue en plan du corps réfléchissant (95) occupée par unité de surface de la seconde surface (91b) augmente dans une direction en s'écartant de la source de lumière (61).

3. Instrument indicateur (1A) comprenant:
un cadran (4) qui est muni de motifs translucides; et
une plaque de guide de lumière (9) qui est agencée de façon à chevaucher une surface arrière du cadran (4),
dans lequel la plaque de guide de lumière (9) est la plaque de guide de lumière (9) selon les revendications 1 ou 2.

4. Ensemble selon la revendication 1, dans lequel une des parties striées (94) présente une surface extérieure (Ha) qui est proche d'un bord externe (91f) de la section d'émission de lumière (91) et sur laquelle la lumière est incidente, et un premier angle (a) entre la surface externe (Ha) et la seconde surface (91b) est déterminé de sorte qu'un angle d'incidence (9) de la lumière sur la surface externe (Ha) est inférieur à un angle critique de la surface externe (Ha) et que la lumière peut être réfractée vers la première surface (91a).

5. Ensemble selon la revendication 4, dans lequel l'une des parties striées (94) présente une surface interne (Hb) qui est proche d'un bord interne (91e) de la section d'émission de lumière (91), et un second angle (ft) entre la surface interne (Hb) et la seconde surface (91b) est déterminée en tenant compte de l'angle d'incidence (9) et de la largeur de la surface réfléchissante (96).

6. Ensemble selon la revendication 5, dans lequel
une autre des portions striées (94[2]) présente le même premier angle (a) et le même second angle (ft) que ceux de l'une des portions striées (94[1]).
